Europäisches Patentamt

European Patent Office

Office européen des brevets

(19)

(11) Publication number: **0 050 089**
A1

## (12) EUROPEAN PATENT APPLICATION

(21) Application number: **81630053.7**

(22) Date of filing: **15.09.81**

(51) Int. Cl.³: **B 29 H 19/00**
**H 05 B 6/78**

(30) Priority: **10.10.80 US 195811**

(43) Date of publication of application:
**21.04.82 Bulletin 82'16**

(84) Designated Contracting States:
**DE FR GB IT**

(71) Applicant: **THE GOODYEAR TIRE & RUBBER COMPANY**
**1144 East Market Street**
**Akron, Ohio 44316(US)**

(72) Inventor: **Fix, Sidney Robert**
**517 Jeffery Drive**
**Lincoln Nebraska 68505(US)**

(74) Representative: **Weyland, Joseph Jean Pierre**
**Goodyear International Tire Technical Center Patent**
**Department Avenue Gordon Smith**
**L-7750 Colmar-Berg(LU)**

(54) Method and apparatus for microwave processing of vulcanized elastomer.

(57) A method for processing for re-use sulfur-vulcanized elastomer containing polar groups may be conducted continuously or intermittently in excess of 1,000 hours by directing a controlled dose of microwave energy through a tube of fused quartz through which the vulcanized elastomer in particulate form is passed.

EP 0 050 089 A1

## METHOD AND APPARATUS FOR MICROWAVE PROCESSING OF VULCANIZED ELASTOMER

The abstract is not to be taken as limiting the invention of this application and in order to understand the full nature and extent of the technical disclosure of this application reference must be made to the following detailed description.

This invention relates to a method and apparatus capable of being operated continuously or intermittently in excess of 1,000 hours for the conversion of sulfur-vulcanized elastomer containing polar groups to a thermoplastic state which can be compounded and re-vulcanized to useful products requiring significant physical properties, such as hose, by the application of a controlled dose of microwave energy.

While it is known to employ microwave energy to convert sulfur-vulcanized elastomer containing polar groups to a state which can be compounded or re-vulcanized as described in United States Patent No 4,104,205 it has not been known how to operate such process continuously or intermittently for extended periods of time, for example, in excess of 1,000 hours particularly when utilizing apparatus such as that described in United States Patent No 4,129,768, the disclosure of which is herein incorporated by reference.

Before Applicant's discovery, all attempts to operate an apparatus according to United States Patent No 4,129,768 utilizing a Pyrex™ tube resulted in breakage after operating the tube for a relatively short period of time, for example, less than 100 hours. Such breakage occurred whether the tube was operated continuously or intermittently, even though the measured temperature of the elastomer at the exit of the tube was of the order of 700°F, which is well below the softening point of about 1200°F of Pyrex$_{TM}$ glass. The frequent failure of Pyrex$_{TM}$ glass tubes as taught by United States Patent No 4,129,768 prevented operation of the devulcanizing process for extended periods of time and resulted in an operation which was commercially unacceptable due to its unreliability and the considerable cost of frequent replacement of the Pyrex$_{TM}$ glass tubes.

The reasons for early failure of the Pyrex$_{TM}$ tubes are not fully appreciated. However, Applicant has discovered that a tube of fused quartz is not subject to early failure as is Pyrex$_{TM}$ glass. The average lifespan of Pyrex$_{TM}$ tubes evaluated was about 25 hours, the maximum lifespan was about 98 hours. Two quartz tubes have been evaluated. The first quartz tube lasted 1113 hours until broken by a mechanic's blow. A second quartz tube has accumulated 1070 hours and is still being evaluated.

According to the present invention a method for converting sulfur-vulcanized elastomer containing polar groups to a state which can be compounded and re-vulcanized into useful articles is capable of being conducted continuously or intermittently for periods of time greatly in excess of that obtainable when employing tubes of Pyrex$_{TM}$ brand glass. The process is conducted in an apparatus which includes a microwave oven having a cavity therein. A source of microwave energy is provided as well as means for conducting the microwave energy to the cavity. An elongated inclined rotatable cylindrical tube of fused quartz extends through the cavity. The elastomeric material which has been reduced to a particulate form is directed into the upper end of the inclined rotatable quartz tube. Simultaneously the inclined tube is rotated to agitate and progressively move the elastomer through the tube from its upper entrance end to its lower exit end. Simultaneously there is directed a controlled dose of microwave energy through the quartz tube and into the elastomer contained therein. The feedrate of the material, the dose and dose rate of microwave radiation, and the frequency of radiation are regulated to control the exit temperature of the processed-for-re-use elastomer. The optimum combination of these factors must be determined empirically for each specific elastomeric compound being processed for re-use which in turn is determined by compounding the microwave-converted elastomer and measuring the physical properties of the resultant compounds. Typical examples of operating conditions are described in United States Patent No 4,104,205, the disclosure of which is herein incorporated by reference.

The material of which the fused quartz tube is formed has a purity of at least 99.9% by weight of silicon dioxide and exhibits a softening point of about or in excess of 1600°C. It is believed that the greatest possible purity obtainable is preferred to maximize transmission of the microwave radiation through the wall of the tube and to prevent or minimize creation of localized hot spots in the wall of the tube. It is believed that elastomer material which temporarily adheres to the inner wall of the tube or contacts a hot spot on the wall of the tube will reach temperatures in excess of that of the bulk of the material as measured at the exit of the elastomer material of the tube. Any elastomer which is subjected to temperatures in excess of the desired maximum is subject to degradation and severance of the carbon-to-carbon bonds resulting in a decrease in the desired physical properties.

While tubes of fused quartz which are clear to visible light have been successfully evaluated and are preferred, it is believed that tubes of fused quartz which are opaque to visible light would also operate for an extended period of time. Tubes of opaque fused quartz are considered more difficult to repair should they become mechanically broken; e.g. by percussion.

While certain representative embodiments and details have been shown for the purpose of illustrating the invention it will be apparent to those skilled in this art that various changes in modifications may be made therein without departing from the spirit or scope of the invention.

CLAIMS

1. A method for processing for re-use sulfur-vulcanized elastomer containing polar groups capable of being conducted continuously or intermittently in excess of 1000 hours comprising the steps of simultaneously

(a) directing a stream of said vulcanized elastomer in particulate form into the upper end of an inclined rotatable tube of fused quartz;

(b) directing a controlled dose of microwave energy through said quartz tube and into the elastomer in an amount sufficient to convert the elastomer to a reusable thermoplastic state;

(c) rotating said inclined tube to agitate and progressively move the elastomer through said tube from its upper to its lower end.

2. A process according to Claim 1 in which the tube is formed of clear fused quartz having a purity of at least 99.9% by weight of $SiO_2$ and a softening point of at least 1600°C.

3. Apparatus capable of being operated continuously or intermittently in excess of 1,000 hours while processing for re-use sulfur-vulcanized elastomer by the application of a controlled dose of microwave energy comprising a microwave oven having a cavity therein and means for supplying microwave power to said cavity, said cavity having therein an elongated inclined rotatable cylindrical tube of fused quartz, means for delivering elastomer to the upper end of said tube and means for removing material having passed through said tube from its lower end.

4. Apparatus according to Claim 3 wherein said tube is formed of clear fused quartz having a purity of at least 99.9% by weight of $SiO_2$ and a softening point of at least 1600°C.

# EUROPEAN SEARCH REPORT

## DOCUMENTS CONSIDERED TO BE RELEVANT

| Category | Citation of document with indication, where appropriate, of relevant passages | Relevant to claim |
|---|---|---|
| X | FR - A - 2 377 136 (GERLING MOORE)<br><br>* page 1, lines 1-37; page 3, lines 26-36; page 5, lines 11-30; page 13, lines 9-21 * | 1,3 |
| D | & US - A - 4 129 768 | |
| | --- | |
| A | DE - A - 1 466 230 (RADIO FRE-QUENCY) | |
| A | EP - A - 0 016 699 (TECHNICS LAMBDA) | |
| A | DE - A - 2 940 340 (RAYTHEON) | |
| A | US - A - 3 777 095 (TSUNEO MURA-NAKA) | |
| A | US - A - 3 626 838 (H. GORAKHPUR-WALLA) | |
| | --------- | |

### CLASSIFICATION OF THE APPLICATION (Int. Cl. 3)

B 29 H 19/00
H 05 B 6/78

### TECHNICAL FIELDS SEARCHED (Int.Cl. 3)

H 05 B 6/78
B 29 H 19/00

### CATEGORY OF CITED DOCUMENTS

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

The present search report has been drawn up for all claims

| Place of search | Date of completion of the search | Examiner |
|---|---|---|
| The Hague | 13-01-1982 | SCHMITT |

EPO Form 1503.1 06.78